Europäisches Patentamt

European Patent Office

Office européen des brevets

(19)

(11) **EP 1 108 471 A2**

(12) **EUROPÄISCHE PATENTANMELDUNG**

(43) Veröffentlichungstag:
   **20.06.2001  Patentblatt 2001/25**

(51) Int Cl.⁷: **B01J 39/04**, B01J 41/04

(21) Anmeldenummer: **00123605.8**

(22) Anmeldetag: **28.10.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **16.12.1999  DE 19960624**

(71) Anmelder: **Forschungszentrum Karlsruhe GmbH 76133 Karlsruhe (DE)**

(72) Erfinder:
   • **Höll, Wolfgang, Prof. Dr.**
    **76275 Ettlingen (DE)**
   • **Stöhr, Cornelia**
    **76133 Karlsruhe (DE)**
   • **Kiefer, Randolf**
    **44892 Bochum (DE)**

(54) **Verfahren zur Abtrennung von Metallionen aus einer Lösung**

(57)   Die Erfindung betrifft ein Verfahren zur Abtrennung einzelner Species von Metallionen aus einer Lösung der Metallionen, bei dem ein Ionenaustauscher alternierend mit der Lösung der Metallionen und einer weiteren Lösung in Kontakt gebracht wird, wobei sich die Lösungen mindestens im pH-Wert unterscheiden. Der Erfindung liegt die Aufgabe zugrunde, dieses Verfahren in der Weise auszugestalten, daß eine weitgehend vollständige Auftrennung von Metallionen bei geringer Zyklenzahl möglich ist. Dies wird erfindungsgemäß dadurch erreicht, daß als weitere Lösung eine Lösung einer Säure eingesetzt wird, in der außer unvermeidlichen Verunreinigungen keine der Species der Metallionen gelöst ist.

EP 1 108 471 A2

**Beschreibung**

Die Erfindung betrifft ein Verfahren zur Abtrennung von Metallionen aus einer Lösung gemäß dem Oberbegriff des ersten Patentanspruchs.

Ein solches Verfahren wird unter der Bezeichnung „teabag-Verfahren" in dem Übersichtsartikel von Norman. H. Sweed in AIChE Symposium Series **233** Vol. 80 (1984) 44-53 beschrieben. Bei diesem Verfahren wird die Lösung geteilt und die Teillösungen auf einen unterschiedlichen pH-Wert gebracht, der im folgenden aufrechterhalten wird. Ein Adsorbens wird in einen "Teebeutel" eingefüllt und so lange alternierend in die beiden Teillösungen getaucht, bis sich ein Gleichgewicht einstellt. Auf diese Weise ergeben sich in beiden Teillösungen unterschiedliche Konzentrationen; d. h., Inhaltsstoffe werden in den Teillösungen an- bzw. abgereichert.

Über die Trennung von Proteinen mit Hilfe des pH-parametrischen Pumpens berichten H. T. Chen, U. Pancharoen, W. T. Yang, C. O. Kerobo und R. J. Parisi in SEPARATION SCIENCE AND TECHNOLOGY, **15** (6), pp. 1377-1391, 1980. In dieser Veröffentlichung werden verschiedene Versionen des parametrischen Pumpens beschrieben.

Ein Verfahren zur Trennung von Metallionen ist weiterhin aus der DE 196 13 280 A1 bekannt. Bei diesem Verfahren wird die Metallionen enthaltene Lösung ebenfalls geteilt, wonach in beiden Teillösungen unterschiedliche pH-Werte eingestellt werden. Als Adsorbens können alle Arten von Ionenaustauscher sowie Aktivkohle eingesetzt werden. Mit diesem Verfahren lassen sich bei der Trennung von Kupfer und Nickel mit Weinsäure als Komplexbildner und pH-Werten in den beiden Teillösungen von 3 bzw. 6 Anreicherungen von bis zu 80 % und Abreicherungen von bis zu 25 % der ursprünglichen Konzentrationen erzielen.

Bei den genannten Verfahren, bei denen die zu behandelnde Lösung in Teillösungen aufgeteilt wird, stellt sich eine verhältnismäßig geringe An- bzw. Abreicherung ein, für die zudem eine hohe Zahl von Zyklen erforderlich ist.

Der Erfindung liegt die Aufgabe zugrunde, ein wirksameres und schnelleres Verfahren der eingangs genannten Art vorzuschlagen, bei dem eine weitgehend vollständige Auftrennung von Metallionen bei geringer Zyklenzahl möglich ist.

Die Aufgabe wird durch die gekennzeichneten Merkmale des ersten Patentanspruchs gelöst. Bevorzugte Ausgestaltungen des Verfahrens sind Gegenstand der weiteren Ansprüche.

Überraschenderweise kann mit dem Verfahren der eingangs genannten Art eine nahezu vollständige Auftrennung von Metallionen bei sehr geringer Zyklenzahl erzielt werden, wenn als zweite Lösung nicht eine Teillösung der zu behandelnden Lösung, sondern eine Lösung einer Säure eingesetzt wird, die zu Beginn des Verfahrens frei ist von den zu trennenden Metallionen. Gut geeignet ist eine reine Lösung einer Säure, etwa die wäßrige Lösung einer Mineralsäure wie z. B. Salzsäure, Schwefelsäure oder Salpetersäure oder auch einer starken organischen Säure wie Ameisensäure oder Essigsäure, die außer den unvermeidlichen Verunreinigungen keine weiteren Komponenten enthält. Im Verlauf des Verfahrens wird die abzutrennende Metallionenspecies aus der Lösung der Metallionen in die Säurelösung transportiert, wodurch sich diese Species in der Säurelösung an- und in der Lösung der Metallionen abreichert. Die Säurelösung wird vorzugsweise auf einen pH-Wert unterhalb von 3 eingestellt.

Der pH-Wert der zu behandelnden Lösung der Metallionen muß sich vom pH-Wert der Säurelösung unterscheiden. Bevorzugt wird, für die Säurelösung einen niedrigeren pH-Wert zu wählen. Ist der pH-Wert der Säurelösung höher als der pH-Wert der Lösung der Metallionen, sinkt die Effektivität des Verfahrens. Der Unterschied der pH-Werte sollte mindestens 0,5 betragen. Die pH-Werte werden während des Verfahrens in üblicher Weise konstant gehalten.

Als Adsorbens wird vorzugsweise ein schwach basischer Anionenaustauscher eingesetzt. Solche Anionenaustauscher werden üblicherweise bei der Vollentsalzung von Wasser zur Entfernung von Chlorid- und Sulfationen eingesetzt. Als schwach basische Anionenaustauscher eignen sich vor allem Phenol-Formaldehyd- oder Chitosan-Harze. Über Stickstoffatome in funktionellen Gruppen von schwach basischen Anionenaustauschern können auch Metallionen, insbesondere Schwermetallionen, gebunden werden. Die Metallionen konkurrieren mit Säureprotonen um Bindungsstellen in den funktionellen Gruppen der schwach basischen Anionenaustauscher. Der Anteil gebundener Protonen bzw. Metallionen hängt vom pH-Wert ab. Zur Durchführung des Verfahrens eignen sich jedoch auch stark basische Anionenaustauscher und schwach saure Kationenaustauscher. Die Menge des Ionenaustauschers wird vorzugsweise so bemessen, daß seine Kapazität für Metallionen geringer ist als die Menge der gelösten Metallionen.

Der Ionenaustauscher wird alternierend mit der Lösung der Metallionen und der Säurelösung in Kontakt gebracht. Dies kann entweder durch das "Teabag-Verfahren", durch Beaufschlagen des Ionenaustauschers im Kreislauf oder durch alternierendes Durchleiten der Lösungen durch ein Filter aus Ionenaustauscher erfolgen. Es empfiehlt sich, nach jedem Kontakt anhaftende Lösung so weit wie möglich zu entfernen. Dies kann beim "Teabag-Verfahren" durch Zentrifugieren und bei den anderen genannten Methoden durch Einleiten von Druckluft geschehen. In beiden Lösungen wird während des Verfahrens der jeweilige pH-Wert konstant gehalten.

Das Verfahren kann mit oder ohne Komplexbildner durchgeführt werden. Als Komplexbildner können insbesondere mittelstarke Komplexbildner wie Wein-, Zitronen- oder Milchsäure Verwendung finden.

Die Adsorptionseigenschaften des Ionenaustauschers lassen sich durch den Einsatz der Komplexbildner verändern, da beispielsweise bei schwach basischen Anionenaustauschern anionische Schwermetallkomplexe mit den Säureanionen um Bindungsplätze im Ionenaustauscher konkurrieren.

Das beschriebene Verfahren hat gegenüber den bekannten Verfahren den wesentlichen Vorteil, daß nicht nur eine mehr oder weniger vollständige An- bzw. Abreicherung der Metallionen in der Lösung erzielt werden kann, sondern eine vollständige Auftrennung der Metallionen. Mit dem Verfahren gelingt es, in der Lösung der Metallionen eine Species am Ionenaustauscher selektiv zu adsorbieren und in der Säurelösung gegen Protonen auszutauschen. Es handelt sich also um einen Transport von Metallionen aus der Lösung in einen separaten Behälter mit der Säurelösung, wobei durch die Wahl des pH-Wertes der Lösung die zu transportierenden Metallionen bestimmt werden können. Die Zahl der Zyklen ist bei dem Verfahren selbst bei einer vollständigen Auftrennung der Metallionen nicht größer als bei den bekannten Verfahren bis zum Gleichgewichtszustand.

Eine besonders bevorzugte Ausführungsform des Verfahrens betrifft den Einsatz von besonders geeigneten, anhand von Vorversuchen ausgewählten Ionenaustauschern und der jeweils einzustellenden pH-Werte in der Lösung der Metallionen und der Säurelösung.

Um das Verfahren mit einer geringen Zyklenzahl durchführen zu können, soll der zu verwendende Ionenaustauscher in Abhängigkeit vom pH-Wert der Metallionen-Lösung optimale Selektivitätsunterschiede gegenüber den aufzutrennenden Metallionen-Species aufweisen. Besonders geeignete Ionenaustauscher lassen sich auswählen, indem die Sorption der Metallionen in Abhängigkeit vom pH-Wert ermittelt wird. Hierfür werden Batch-Versuche durchgeführt, wobei sowohl die Ausgangskonzentration an Metallionen als auch der Batchfaktor, der als das Verhältnis der Gewichte von Ionenaustauscher und Lösung definiert ist, konstant gehalten und der Anfangs-pH-Wert der Metallionen enthaltenden Lösung variiert wird. Nach der Gleichgewichtseinstellung werden die entsprechenden Beladungen $q(i)$ des Ionenaustauschers aus der Differenz der Metallionenkonzentration in der Ausgangslösung und in der Lösung bei Versuchsende berechnet:

$$q(i) = z(i) * [c_0(i) - c_i(i)]/m$$

mit $q(i)$:    Beladung des Austauschers mit der Metallionenspecies $i$

$z(i)$ :    Ladung der Metallionenspecies

$c_0(i)$:    Ausgangskonzentration der Metallionenspecies in der Lösung

$c_i(i)$    Gleichgewichtskonzentration der Metallionenspecies in der Lösung

$m$:    Masse des eingesetzten Ionenaustauschers.

Trägt man die Beladung $q(i)$ des Ionenaustauschers mit den unterschiedlichen Metallionenspecies gegen den Gleichgewichts-pH-Wert der Lösung auf, erhält man eine Darstellung, aus der sich voneinander trennbare Metallionen und die dazugehörigen pH-Werte ablesen lassen.

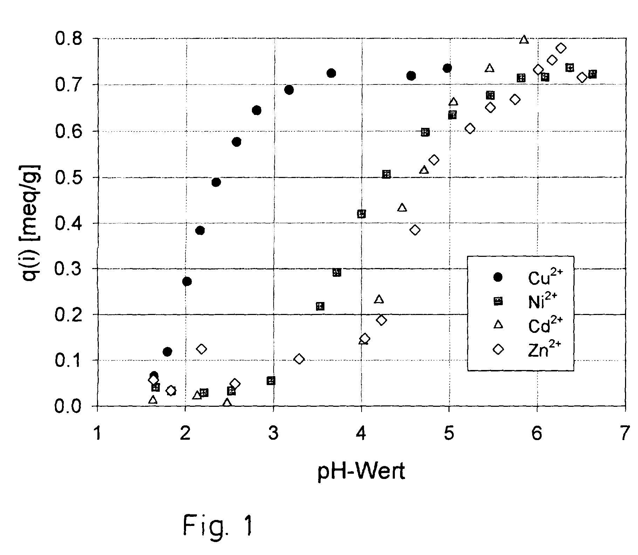

In Fig. 1 ist eine solche Darstellung gezeigt. In dem dargestellten Diagramm ist die Beladung des Ionenaustauschers $q(i)$ für die Metallionen $i = Cu^{2+}$, $Ni^{2+}$, $Cd^{2+}$ und $Zn^{2+}$ gegen den Gleichgewichts-pH-Wert aufgetragen.

Die in dem Diagramm aufgetragenen Werte wurden erhalten, indem zu 2 g des schwach basischen Anionenaustauschers Fuji PEI-CS-07 in der OH-Form, der 20 Minuten lang bei 5000 min$^{-1}$ zentrifugiert wurde, 200 ml einer Lösung, in der jeweils 5 mmol/l der Metallionen als Chloride gelöst waren, hinzugefügt wurden. Die

Proben wurden bei $25 ^\pm 2 °C$ für 72 Stunden in Polyethylen-Flaschen geschüttelt. Der Ausgangs-pH-Wert wurde von 1,3 bis 3,3 variiert und der sich einstellende Gleichgewichts-pH-Wert bestimmt. Die sich einstellende Metallionenkonzentration wurde mittels AAS analysiert.

Aus Fig. 1 läßt sich ableiten, daß der schwach basische Anionenaustauscher PEI-CS-07 prinzipiell für die Abtrennung von Kupfer aus Lösungen, die außerdem Nickel, Zink und/oder Cadmium enthalten, geeignet ist. Für jede Species der Metallionen ergeben sich in dem Diagramm Kurven, die etwa im mittleren Bereich jeweils einen Wendepunkt aufweisen. Der Wendepunkt der Kurve für $Cu^{2+}$ ist parallel zur Abszisse nahezu 2 pH-Einheiten von den Wendepunkten der Kurven für $Ni^{2+}$, $Cd^{2+}$ und $Zn^{2+}$ entfernt. Bei einem pH-Wert von 3 in der Metallionen enthaltenden Lösung wird Kupfer gegenüber den übrigen Metallionen bevorzugt adsorbiert. Eine gute Adsorption des in der Selektivitätsreihe auf Kupfer folgenden Nickels ist erst bei einem pH-Wert von 3,5 zu verzeichnen. Die Auftrennung der Elemente Nickel, Cadmium und Zink gelingt mit dem Anionenaustauscher PEI-CS-07 ohne Modifikation des Verfahrens nicht, da diese Metallionen bei allen pH-Werten nahezu gleich gut sorbiert werden.

Mit einem Diagramm des in Fig. 1 dargestellten Typs lassen sich in einfacher Weise geeignete Ionenaustauscher auswählen. Prinzipiell sind solche Ionenaustauscher zur Durchführung des Verfahrens geeignet, bei denen die Wendepunkte der Kurven für zwei zu trennende Metallionenspecies parallel zur Abszisse mindestens einen Abstand von 0,5 pH-Einheiten aufweisen. Aus dem Diagramm können weiterhin die am besten geeigneten pH-Werte sowohl für die Lösung der Metallionen als auch für die Säurelösung abgelesen werden. Der pH-Wert in der Lösung der Metallionen wird vorzugsweise auf einen Wert eingestellt, bei dem eine der beiden zu trennenden Metallionenspecies am Ionenaustauscher adsorbiert wird, die andere Species jedoch nicht. Der pH-Wert der Säurelösung wird vorzugsweise so eingestellt, daß bei dem betreffenden pH-Wert keine der beiden Species adsorbiert wird.

Wie bereits erwähnt, können mit manchen Ionenaustauschern einige Metallionenspecies nicht voneinander getrennt werden, da ihre Adsorptionseigenschaften zu ähnlich sind. Eine Möglichkeit zur Veränderung der Selektivität eines Ionenaustauschers besteht in der Zugabe von Komplexbildnern zur Lösung der Metallionen. Geeignete Komplexbildner sind vor allem solche mittlerer Kompexierungsstärke wie z. B. Weinsäure und Zitronensäure. Diese bilden mit Metallionen je nach pH-Wert der Metallionen enthaltenden Lösung neutrale oder anionische Komplexe. Dadurch sind die Metallionen entweder so maskiert, daß sie dem Austauschergleichgewicht entzogen sind, oder sie werden für den Austauscher besser zugänglich, wie im Fall der schwach und stark basischen Anionenaustauscher, die über positiv geladene funktionelle Gruppen die Metallionen auch in Form von anionischen Komplexen aufnehmen können. Hierfür lassen sich die einzustellenden pH-Werte aus den Speziationsrechnungen für die entsprechenden Lösungen bestimmen. Dies wird im folgenden am Beispiel der - ohne Zusatz von Komplexbildnern mit dem Ionenaustauscher PEI-CS-07 nicht möglichen - Auftrennung von Cadmium und Nickel gezeigt.

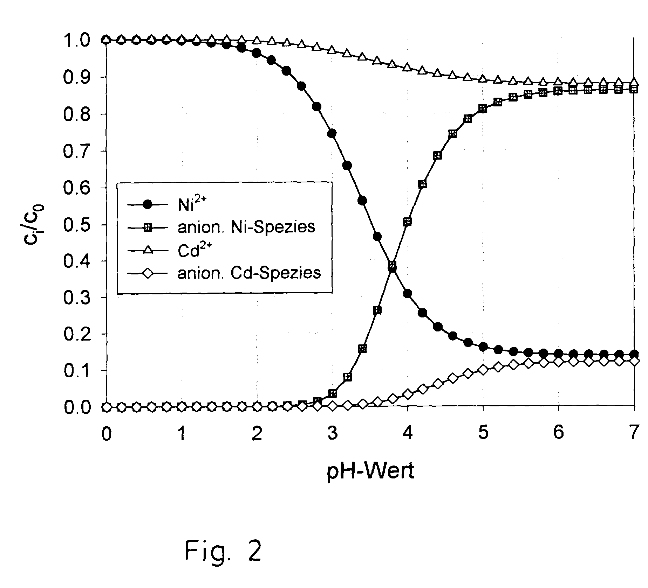

Fig. 2 zeigt das Ergebnis der Speziationsrechnung für das System Cadmium, Nickel und Citronensäure mit einer Konzentration von jeweils 5 mmol/l.

Aus Fig. 2 ist ersichtlich, daß ein pH-Wert von 5 in der die Metallionen und das Citrat enthaltenden Lösung und eine Säurelösung mit einem pH-Wert von 2 zur Trennung von Cadmium und Nickel zu wählen sind. Bei einem pH-Wert von 5 liegen ca. 80 % des Nikkels und nur 10 % des Cadmiums in Form anionischer Komplexe vor, während bei einem pH-Wert von 2 alle Metallionen unkomplexiert sind. Bei pH 5 wird das anionische Nickelcitrat aufgenommen; beim Kontaktieren des Ionenaustauschers mit der Säure wird dieser Komplex zerstört und das Nickel in der Säurelösung freigesetzt. Auch das Citrat verbleibt in der Säurelösung, da es als neutrale Citronensäure und nicht als Anion vorliegt und somit nicht mehr vom Ionenaustauscher aufgenommen werden kann. Daraus folgt, daß Nickel und Citrat in die Säurelösung transportiert werden. Zurück bleibt eine reine Cadmiumlösung.

Der pH-Wert in der die Metallionen enthaltenden Lösung wird somit so eingestellt, daß eine der beiden zu trennenden Metallionenspecies hoch komplexiert und die andere Species gering komplexiert ist. Der pH-Wert der Säurelösung wird so eingestellt, daß keine Komplexe vorliegen.

Sowohl für den Einsatz von Komplexbildnern als auch ohne die Verwendung von Komplexbildnern gilt, daß der Gesamtkapazität K der einzusetzenden Ionenaustauschermenge m mindestens der Hälfte der in dem Volumen V der Lösung enthaltenen Äquivalente an Metallionen entsprechen sollte:

$$K = q_{max}*m \geq 0,5*c_0(i)*z(i)*V.$$

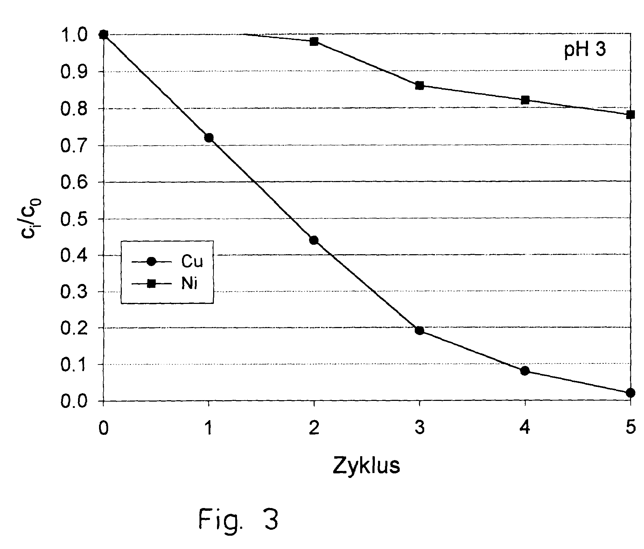

Das Verfahren wird im folgenden anhand von zwei Beispielen und den Figuren 3, 4, 5 und 6 eingehender erläutert.

Beispiel 1

Verfahren ohne Komplexbildner

Die Ausgangslösung bestand aus einer Mischung von CuCl2 und $NiCl_2$. Beide Komponenten hatten eine Ausgangskonzentration von 5 mmol/l. Als Ionenaustauscher wurden 6 g eines Harzes auf Citosanbasis (Fuji PEI-CS-07) mit einem $q_{max}$ von 2,6 meq/g eingesetzt. Der pH-Wert in der Lösung wurde auf 3 eingestellt. Außerdem wurde eine 0,1 mol/l HCl-Lösung mit einem pH-Wert von 1 hergestellt. Die pH-Werte wurden während der Kontaktzeiten mit dem Ionenaustauscher über eine automatische Regelung konstant gehalten.

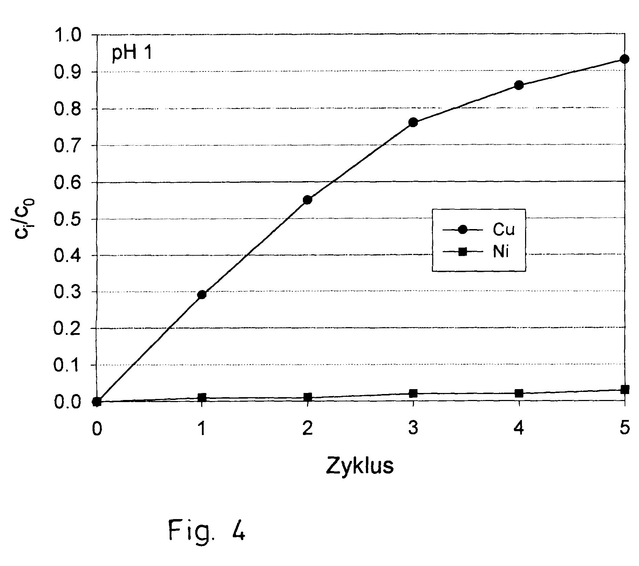

Der Verlauf der dimensionslosen Konzentration von Kupfer und Nickel ist in den Fig. 3 und 4 dargestellt. Es läßt sich erkennen, daß die Kupferkonzentration in der Lösung mit höherem pH-Wert nach 5 Zyklen auf weniger als 5 % der Ausgangskonzentration abgesunken ist. Umgekehrt entspricht die Kupferkonzentration in der Säurelösung nach 5 Zyklen annähernd der in der Lösung abgereicherten Menge. Man erhält also eine fast reine Nickelchloridlösung mit einem pH-Wert von 3 und eine fast reine Kupferchloridlösung mit einem pH-Wert von 1.

Beispiel 2

Verfahren mit Komplexbildner

Die Ausgangslöung bestand aus einer Mischung von $CdCl_2$ und $NiCl_2$ mit einer Konzentration von jeweils 5 mmol/l. Dieser Lösung wurde ein Komplexbildner in Form von Natriumcitrat im Verhältnis 1:2 Komplexbildner- zu Metallionenkonzentration zugesetzt und ein pH-Wert von 5 eingestellt. Außerdem wurde eine reine Salzsäurelösung mit einem pH-Wert von 2 vorbereitet. Als Ionenaustauscher wurden 10 g des schwach basischen PEI-CS-07 eingesetzt.

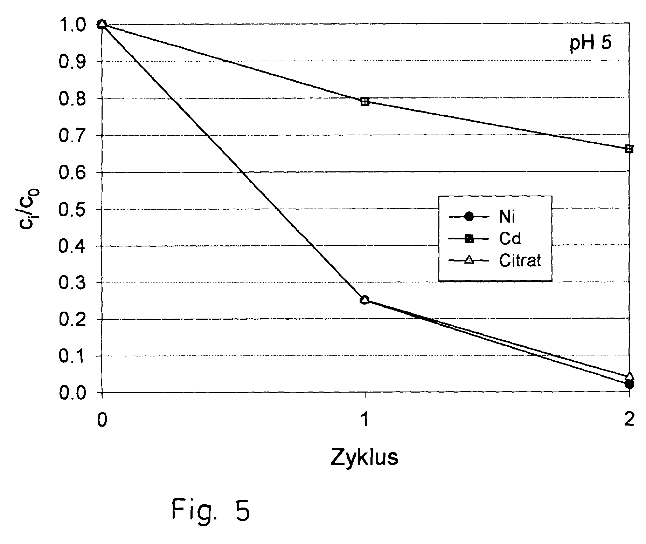

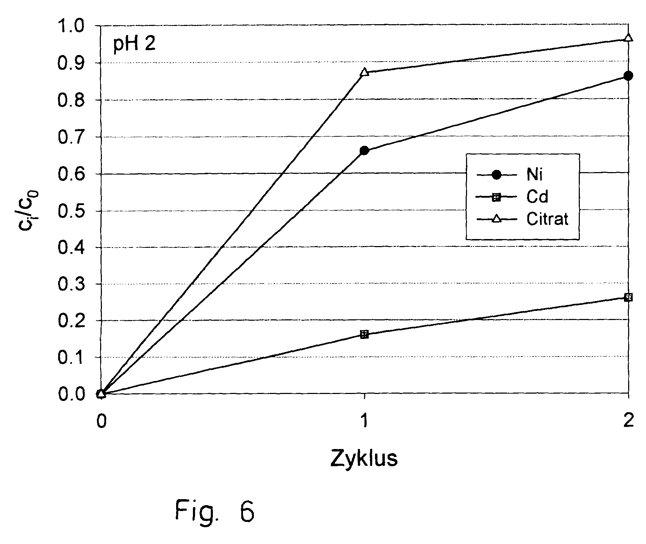

Die Ergebnisse sind in den Figuren 5 und 6 dargestellt. Nach 2 Zyklen war die Nickelkonzentration in der Lösung der Metallionen auf weniger als 5 % der Ausgangskonzentration abgereichert, während sich die entsprechende Nickelmenge in der Säurelösung angereichert hatte. Die Komplexbildnerkonzentration (DOC) verläuft analog der Nickelkonzentration; d. h., aus der Lösung der Metallionen ist auch das Citrat nach 2 Zyklen entfernt. Ein Teil des Cadmiums (ca. 30 %) wird in die Säurelösung transportiert, jedoch bleibt eine fast reine Cadmiumlösung zurück.

Nach dieser Methode ließen sich auch Lösungen von Nickelchlorid und Zinkchlorid (1:1) unter Zusatz von Citrat auftrennen.

## Patentansprüche

1. Verfahren zur Abtrennung einzelner Species von Metallionen aus einer Lösung der Metallionen, bei dem ein Ionenaustauscher alternierend mit der Lösung der Metallionen und einer weiteren Lösung in Kontakt gebracht wird, wobei sich die Lösungen mindestens im pH-Wert unterscheiden, dadurch gekennzeichnet, daß als weitere Lösung eine Lösung einer Säure eingesetzt wird, in der außer unvermeidlichen Verunreinigungen keine der Species der Metallionen gelöst ist.

2. Verfahren nach Anspruch 1, dadurch gekennzeichnet, daß als Ionenaustauscher ein stark oder schwach basischer Anionenaustauscher oder ein schwach saurer Kationenaustauscher eingesetzt wird.

3. Verfahren nach Anspruch 1, dadurch gekennzeichnet, daß als Metallionen Schwermetallionen eingesetzt werden.

4. Verfahren nach Anspruch 1, dadurch gekennzeichnet, daß als Säure eine Mineralsäure eingesetzt wird.

5. Verfahren nach Anspruch 1, dadurch gekennzeichnet, daß in der Lösung ein pH-Wert von 0 bis 5 eingestellt wird.

6. Verfahren nach Anspruch 1, dadurch gekennzeichnet, daß der pH-Wert der Lösung der starken Säure mindestens 3 beträgt.

7. Verfahren nach einem der Ansprüche 1 bis 6, dadurch gekennzeichnet, daß ein solcher Ionenaustauscher zur Trennung von zwei Species von Metallionen ausgewählt wird, bei dem sich in einem Diagramm, in dem die Beladung des Ionenaustauschers mit jeder der beiden Species gegen den Gleichgewichts-pH-Wert aufgetragen ist, jeweils eine Kurve mit einem Wendepunkt für jede der beiden Species ergibt und die Wendepunkte der Kurven parallel zur Abszisse mindestens einen Abstand von 0,5 pH-Einheiten aufweisen.

8. Verfahren nach Anspruch 7, dadurch gekennzeichnet, daß in der Lösung der Metallionen ein solcher pH-Wert eingestellt wird, bei dem eine der beiden Species weitgehend, die andere Species jedoch praktisch nicht an dem Ionenaustauscher adsorbiert wird.

9. Verfahren nach Anspruch 7 oder 8, dadurch gekennzeichnet, daß in der Lösung der Säure ein solcher pH-Wert eingestellt wird, bei dem keine der beiden Species in nennenswertem Umfang an dem Ionenaustauscher adsorbiert wird.

10. Verfahren nach einem der Ansprüche 7, 8 oder 9, dadurch gekennzeichnet, daß die Lösung der Metallionen mit einem solchen Komplexbildner versetzt wird, der mit den beiden zu trennenden Species der Metallionen in unterschiedlichem Ausmaß anionische Komplexe bildet.

Fig. 1

Fig. 2

Fig. 3

Fig. 4

EP 1 108 471 A2

Fig. 5

EP 1 108 471 A2

Fig. 6